# EUROPEAN PATENT SPECIFICATION

(11) **EP 3 012 473 B1**
(45) Date of publication and mention of the grant of the patent: **13.12.2017**
(21) Application number: 14190329.4
(22) Date of filing: 24.10.2014
(51) Int. Cl.: F16C 33/66, F16C 19/52, F01M 11/04, F16N 31/00, F16N 11/08

(54) **Bearing unit and method for operating and maintenance of such a bearing unit**
Lagereinheit und Verfahren zum Betrieb und zur Wartung solch einer Lagereinheit
Unité de roulement et méthode pour opérer et assurer la maintenance d'une telle unité de roulement

(43) Date of publication of application: 27.04.2016
(73) Proprietor: Aktiebolaget SKF, 415 50 Göteborg (SE)
(72) Inventor: Duchassin, Arnaud, 37260 Monts (FR); Guerry, Christophe, 37230 Fondettes (FR)
(74) Representative: Tweedlie, Diane Harkness

(56) References cited:
- EP-A1- 2 557 017
- EP-A2- 2 657 556
- DE-A1- 19 947 458
- DE-T2- 60 209 678
- US-A1- 2012 141 270

## Description

### Field of the Invention

The present invention relates to a bearing unit, in particular for use in axlebox of a railway vehicle, and to a method for maintenance of such a bearing unit.

### Background of the Invention

Bearing units including rolling elements are mostly lubricated.

The lubricant partly evaporates and deteriorates and then loses its performance over time which results in loss of performance of the bearing and required several maintenance steps.

At each maintenance step, the bearing - and in the case of a railway axlebox the axlebox as a whole - is dismounted, cleaned, inspected, refurbished and remounted in order to replace worn grease with new grease.

It is known to use electro-mechanical single point and multi-point automatic lubricators with lubricant pumps in some fields of application. However, the available solutions have not been considered applicable in the harsh environment of railway axleboxes. Further, the available lubrication systems are based on the principle that a constant flow of new lubricant pushes the worn lubricant out of the bearing via its seals, which are therefore designed so as to have a certain leaking rate. In many fields of application including train applications, the increasingly strict environmental regulations impose limits on the allowable leakage of worn lubricant into the environment.

In particular, it is known from EP 2 657 556 A2 to provide a lubricant circuit in connection with bearings. Said Bearings are connected to an automatic supply unit comprising a reservoir of lubricant, a pump and a channel. Said supply unit has a function of supplying said lubricant into said bearings. Bearings are further connected to a forced discharge unit comprising a collecting reservoir, a screw pump and a discharge channel. Said discharge unit has a function of removing lubricant from said bearings. Lubricant of said bearings is replaced, new lubricant being supplied by the automatic supply unit and, at a same time, worn lubricant being discharges from said bearings so as to substantially maintain a constant amount of lubricant in said bearings and replenish said bearings with new lubricant to maintain performance.

However, the arrangement of this prior art requires a computerized process in which a charge amount of lubricant is set in an automatic supply unit, said information being transmitted to a forced discharge unit to set a discharge amount of lubricant accordingly. It is then desirable to provide a lubricant circuit of simplified use process.

### Summary of the Invention

The invention seeks to overcome the above problems by providing a bearing unit suitable for automatic or semi-automatic lubrication with reduced emissions of worn lubricant to the environment. Another object of the present invention is to propose a bearing unit comprising a lubricant replenishing circuit with an improved arrangement of reservoirs of supplied and removed lubricant, that is compact, easy to install and replace during a maintenance process, and of simplified use.

The invention starts from a bearing unit comprising a bearing with a rotatable ring, a non-rotating ring and at least one row of rolling elements in a rolling chamber at least partially filled with a lubricant defined between the said rings.

It is proposed that the rolling chamber is provided with at least two lubricant channels, wherein at least a first one of the lubricant channels is configured to remove worn lubricant from the rolling chamber. The first lubricant channel enables a secure and environmentally friendly removal of the worn lubricant which may be transported to a reservoir where it can be stored for recycling or other use.

The at least second one of the lubricant channels other than the first lubricant channel is configured to refill fresh lubricant into the rolling chamber. The worn lubricant can be exchanged in a simple way without leakage of the seals by removing worn lubricant through one channel and refilling new lubricant to the other channel.

The bearing unit further comprises at least one first lubricant reservoir connected to the first lubricant channel and a second lubricant reservoir connected to a lubricant channel other than the first lubricant channel. The reservoirs can be refilled and/or depleted upon maintenance of the bearing, wherein the maintenance intervals can be extended due the automatic lubrication during the service life of the bearing. Then the worn lubricant in the bearing rolling chamber is able to be displaced to a first lubricant reservoir through the first lubricant channel and replaced in the rolling chamber by new lubricant from the second lubricant reservoir through the second lubricant channel.

The bearing unit further includes at least one lubricant pump, wherein the lubricant channels are connected to the lubricant pump respectively. Said lubricant pump includes at least one first lubricant reservoir connected to the first lubricant channel and a second lubricant reservoir connected to a lubricant channel other than the first lubricant channel.

According to the invention, the lubricant reservoirs are arranged on two sides of a movable piston such that an increase in volume in one of the reservoirs corresponds to a decrease in volume of the other reservoir and vice versa such that the lubricant in the bearing rolling chamber sucked into the first lubricant reservoir and replaced in the bearing rolling chamber by the lubricant of the first lubricant reservoir by moving the piston. Preferably, the piston is driven by a rotating screw engaging with a thread in the piston.

Preferably, the points where the channels join the rolling chamber are arranged at a large axial distance within the rolling chamber in order to avoid that new lubricant is immediately removed while worn lubricant remains in other parts of the rolling chamber.

In a preferred embodiment of the invention, each channel is connected to a recess in the walls of the rolling chamber. For example, said recess can be configured such that worn grease is collected therein so as to simplify drawing in the worn lubricant. Preferably, the recess is provided in a cylindrical surface of the non-rotating ring of the bearing unit in the bearing chamber.

According to an aspect of the invention, one single pump can be used to feed the new lubricant into the rolling chamber and to draw in the worn lubricant. Alternatively, it would be possible to use two independent pumps. The lubricant pump could be driven by an electric actuator or a rotating axle or other element supported by the rotating ring, wherein gears and/or an alternator may be used if necessary.

The lubricant reservoirs may be external to the bearing unit, i.e. mounted on an external device, such as an axlebox or a railway bogie.

Alternatively, the lubricant reservoirs may be integrated with the bearing unit so as to form one device. The lubricant reservoirs may be integrated within cast components of the bearing unit, such as a housing or a cover. Alternatively, the lubricant reservoirs are fixed onto the bearing unit by any appropriate means.

According to a further aspect of the invention, said first and second lubricant reservoirs form two chambers in a replaceable cartridge. For maintenance, it would then be sufficient to remove an old cartridge with worn lubricant and to replace it with a fresh cartridge with fresh lubricant and an empty reservoir for worn lubricant. The cartridges could then be recycled by removing the old lubricant and filling new lubricant.

According to a further aspect of the invention, it is proposed that the bearing unit further includes at least one sensor configured to detect at least one operating parameter of the bearing and control unit configured to drive said at least one lubricant pump based on the signals of the sensor. The sensor may be a temperature sensor, a vibration sensor, an acoustic emission sensor or a chemical or electro-chemical sensor detecting a quantity suitable for deriving information on the quality of the lubricant. If the quality is judged to be no longer sufficient, the control unit would start driving the lubricant pump or the lubricant pumps to refurbish the lubricant automatically.

The control unit could be used for driving the lubricant pump even without the sensor and may by operated automatically and/or by hand, electrically and/or mechanically, at regular time steps or triggered by the sensor.

The invention also relates to an axlebox for railway vehicles equipped with a bearing unit as described above mounted within a housing (16) and covered by a cover (22), said housing (16) being covered by a end cap (20), said bearing unit being dedicated to be mounted onto an axle (18).

A yet further aspect of the invention relates to a method for operating a bearing unit as described above, the method comprising detecting at least one operating parameter of the bearing unit, removing worn lubricant using the first lubricant channel and replenishing the lubricant with new lubricant if the at least one operating parameter meets at least one predetermined criterion.

In a preferred embodiment, the method includes replacing at least one lubricant reservoir connected to the first lubricant channel with a new lubricant reservoir.

Alternatively, the method may include emptying at least one lubricant reservoir connected to the first lubricant channel and refilling a lubricant reservoir connected to the second lubricant channel.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

### Brief Description of the Figures

- Fig. 1: is a sectional view of a bearing unit according to a first embodiment of the invention;
- Fig. 2: is a further sectional view of a bearing unit according to the first embodiment of the invention;
- Fig. 3: is a perspective view of the bearing unit according to the first embodiment of the invention;
- Fig. 4: is a sectional view of a bearing unit according to a second embodiment of the invention;
- Fig. 5: is a further sectional view of a bearing unit according to the second embodiment of the invention; and
- Fig. 6: is a perspective view of the bearing unit according to the second embodiment of the invention.
- Fig. 7: is a sectional view of a bearing unit according to a third embodiment of the invention.

### Detailed Description of the Embodiments

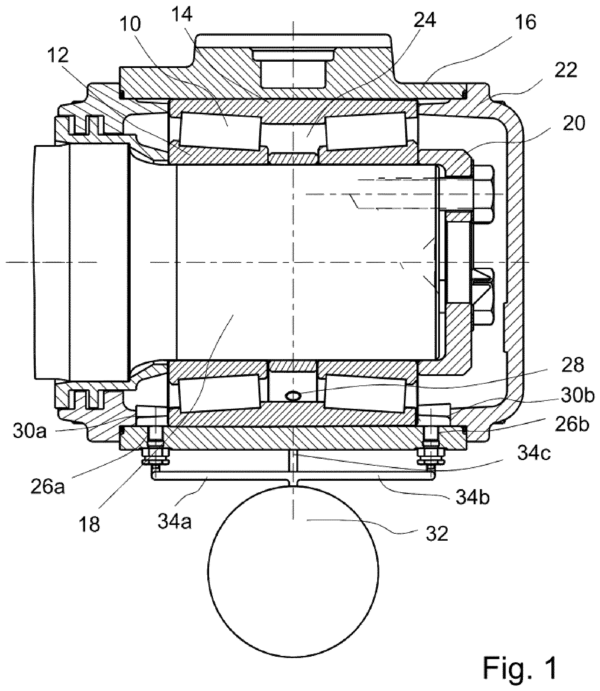

Fig. 1 is a sectional view in an axial plane of a bearing unit according to a first embodiment of the invention. The bearing unit is an axlebox for railway boogies and includes a double row roller bearing with two rows of cylindrical or tapered rollers 10, respective inner rings 12 and outer rings 14 held in a housing 16. The inner rings 12 are mounted on an axle 18 and held thereon with preload by an end cap 20. The bearing assembly is covered by a cover 22. The space between the inner rings 12, the outer rings 14 and the cover 22 is referred to as the rolling chamber 24 and is filled with grease as a lubricant. Though not illustrated, the bearing may comprise sealing means in order to seal the rolling chamber 24 from the exterior.

The rolling chamber 24 is provided with two first lubricant channels 26a, 26b configured to remove worn lubricant from the rolling chamber 24 and with a second lubricant channel 28 configured to refill fresh lubricant into the rolling chamber 24. The two first lubricant channels 26a, 26b are provided on axially opposite sides of the bearings in recesses 30a, 30b formed in the walls of the rolling chamber 24 in such a way that worn grease is collected therein.

A cartridge 32 with a lubricant pump 38 is arranged below the housing 16 and connected to the lubricant channels 26a, 26b, 28 via pipes 34a, 34b, 34c.

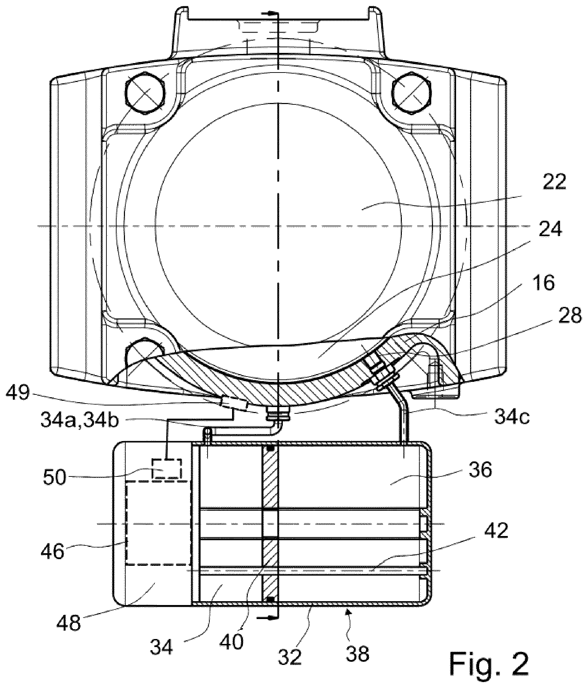

Fig. 2 is a partial section in a radial plane of a bearing unit according to the first embodiment of the invention.

As illustrated in Fig. 2, the cartridge 32 ccomprises a first lubricant reservoir 34 connected to the two first lubricant channels 26a, 26b and a second lubricant reservoir 36 connected to the second lubricant channel 28. The lubricant reservoirs 34, 36 are pumping chambers of the lubricant pump 38 or of a lubricant syringe.

The lubricant reservoirs 34, 36 are arranged on two sides of a movable piston 40 such that an increase in volume in one of the reservoirs 34, 36 corresponds to a decrease in volume of the other reservoir 34, 36 and vice versa. By axially moving the piston 40, the lubricant in the rolling chamber 24 is sucked into the first lubricant reservoir 34 and replaced in the rolling chamber 24 by the lubricant of the second lubricant reservoir 36. The piston 40 is fixed in rotation by an anti-rotation rod 42.

The piston 40 is driven by a worm screw 44 which is driven by an electric actuator 46 or other driving system accommodated in a dedicated space 48 of the cartridge 32.

The cartridge 32 with the first and second lubricant reservoirs 36 can be easily replaced once the second lubricant reservoir 36 with the fresh lubricant is empty and/or the first lubricant reservoir 34 is full.

In a possible embodiment of the invention, at least one sensor 49 configured to detect at least one operating parameter of the bearing such as a temperature or vibration level is arranged on the bearing housing 16 and a control unit 50 configured to drive the lubricant pump 38 based on the signals of the sensor 49 is arranged in the space for the driving system. In further embodiments of the invention, the control unit 50 may drive the actuator 46 autonomously at constant speed or based on signals received from external units.

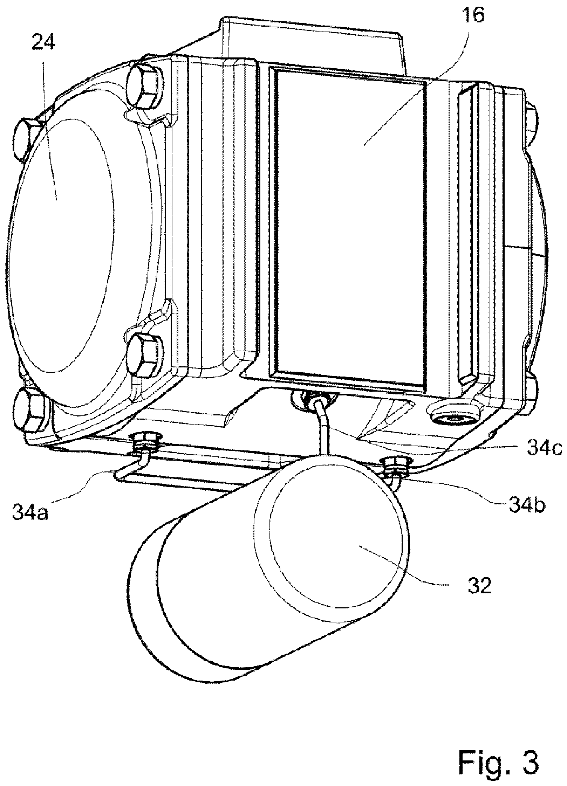

Fig. 3 is a perspective view of the bearing unit according to the first embodiment of the invention. The cartridge 32 is illustrated as being arranged underneath the axlebox. However, the skilled person will easily see that the cartridge 32 may be placed at any suitable place on the railway boogie where it is sufficiently protected and easily accessible for maintenance.

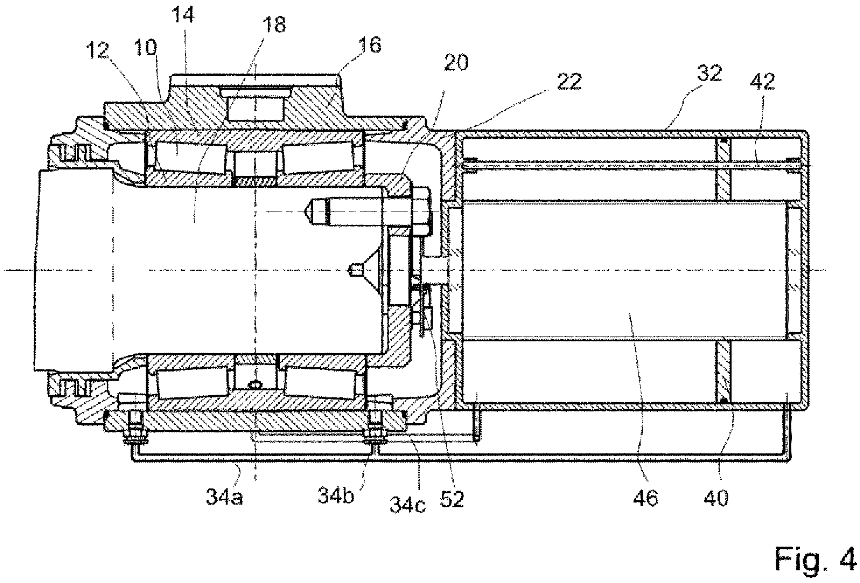

Fig. 4 - 6 illustrate a second embodiment of the invention. The following description is essentially limited to differences to the embodiment of Figs. 1 - 3 and the reader is referred to the above description of the embodiment of Figs. 1 - 3 for features which are unchanged. Features with similar functions are provided with the same reference numbers in order to highlight similarities.

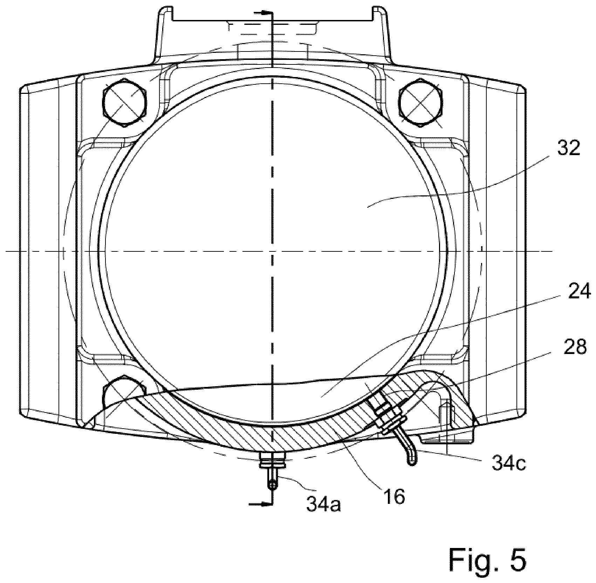

Fig. 4 is a partial section in a radial plane of a bearing unit and Fig. 5 is a sectional view in an axial plane of the bearing unit according to the second embodiment of the invention.

A cartridge 32 with a lubricant pump 38 is attached to the axial end face of a cover 22 of the bearing unit and connected to lubricant channels 26a, 26b, 28 via axially extending pipes 34a, 34b, 34c.

As illustrated in Fig. 5, the cartridge 32 comprises at least one first lubricant reservoir 34 connected to the two first lubricant channels 26a, 26b and a second lubricant reservoir 36 connected the second lubricant channel 28.

An autonomous driving system 46 for driving a piston 40 is arranged in a centre of the cartridge 32 and is driven by the end cap 20 of the axlebox via a driving plate 52 engaging with the bolts holding the end cap 20. The driving plate 52 may be connected to the input shaft of a gear mechanism or of a generator used as a driving system 48 to drive the lubricant pump 38.

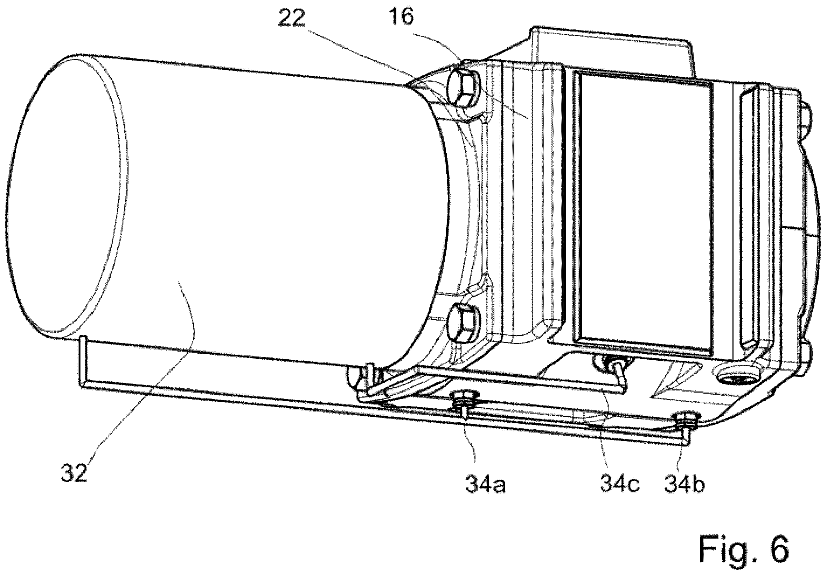

Fig. 6 is a perspective view of the bearing unit according to the second embodiment of the invention.

Both embodiments of the invention enable using a method for operating a bearing unit wherein at least one operating parameter of the bearing unit is detected, worn lubricant is removed using the first lubricant channels 26a, 26b and the lubricant is then replenished with new lubricant using the second lubricant channel 28 if the at least one operating parameter meets at least one predetermined criterion.

The maintenance is simplified and it may at least in some maintenance intervals be sufficient to replace at least one lubricant reservoir 34 connected to the first lubricant channel 26a, 26b with a new lubricant reservoir. Dismounting of the axlebox can be dispensed with. Alternatively, the lubricant reservoirs 34, 36 could be drained and refilled easily by rotating the worm screw 44.

The process of refurbishing or replacing the cartridge 32 may be performed during the bearing unit service life. The process may performed by an operator during a specific maintenance operation when the second lubricant reservoir 36 is empty and/or the first lubricant reservoir 34 is full of worn lubricant. Then the operator fills the first second reservoir 36 and removes the worn lubricant from the first lubricant reservoir 34.

The maintenance operator does not have to dismount, clean and remount the bearing unit since he just has to refurbish the second lubricant reservoir 36 with fresh lubricant.

Further, it is avoided that the ecological environment is affected by worn lubricant.

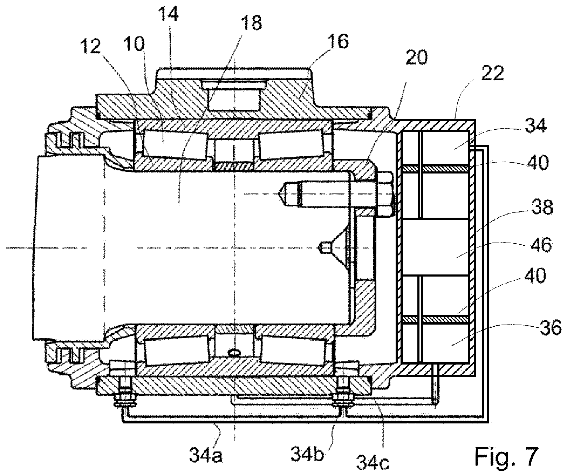

Fig. 7 is a sectional view in an axial plane of the bearing unit according to the third embodiment of the invention.
A lubricant pump 38 is integrated within a cover 22 of the bearing unit. Two lubricant reservoirs 34, 36 are arranged within the cover cast material. The said lubricant reservoirs 34, 36 are connected to a rolling chamber 24 of the bearing unit via pipes 34a, 34b, 34c and lubricant channels 26a, 26b.

An autonomous driving system 46 for driving pistons 40 is arranged within said cover 22 between the two reservoirs 34, 36. A recess may be provided onto said cover 22 so as to integrated said driving system 46, said cover being covered by a sealed cap (not illustrated).

A first piston 40 is arranged within the lubricant reservoir 36 so as to push a new lubricant to the rolling chamber 24 via the pipe 34c and the channel 28 while a second piston 40 is arranged within the lubricant reservoir 34 so as to suck worn lubricant from the rolling chamber 34 via the channels 26a, 26b and the pipes 34a, 34b.

Such an arrangement permits to save space.

In a similar way, the lubricant pump 38 may be integrated within a housing 16 that surrounds the outer ring 14.

Although the present invention has been illustrated using a bearing unit provided with a double-row roller bearing, it will be understood that the invention can be applied without major modification to bearings using rolling elements that are balls, rollers and that have one or several rows of rolling elements.
Moreover, although the invention has been illustrated on the basis of an axlebox for a railway vehicle, it should be understood that the invention can be applied to bearing unit used for any type of application.

## Claims

1. Bearing unit comprising a bearing with a rotating ring (12), a non-rotating ring (14) and at least one row of rolling elements (10) in a rolling chamber (24) at least partially filled with a lubricant defined between the said rings (12, 14), said rolling chamber (24) being provided with at least two lubricant channels (26a, 26b, 28), wherein a first one of the lubricant channels (26a, 26b, 28) is configured to remove worn lubricant from the rolling chamber (24) and a second one of the lubricant channels (26a, 26b, 28) other than the first lubricant channel is configured to refill fresh lubricant into the rolling chamber (24), said lubricant channels (26a, 26b, 28) being connected to a lubricant pump (38) including at least one first lubricant reservoir (34) connected to the first lubricant channel (26a, 26b) and a second lubricant reservoir (36) connected to a lubricant channel (28) other than the first lubricant channel.
**characterized in that** the lubricant reservoirs (34, 36) are arranged on two sides of a movable piston (40) such that an increase in volume in one of the reservoirs corresponds to a decrease in volume of the other reservoir and vice versa such that the lubricant in the bearing rolling chamber (24) is sucked into the first lubricant reservoir (34) and replaced in the bearing rolling chamber (24) by the lubricant of the first lubricant reservoir (34) by moving the piston (40).

2. Bearing unit according to claims 1, **characterized by** further including at least one sensor (48) configured to detect at least one operating parameter of the bearing and a control unit (50) configured to drive said at least one lubricant pump (38) based on the signals of the sensor (48).

3. Bearing unit according to one of the preceding claims, **characterized in that** said first lubricant channel (26a, 26b) is connected to a recess (30a, 30b) in the walls of the rolling chamber (24), wherein said recess is configured such that worn grease is collected therein.

4. Bearing unit according to claim 3, **characterized in that** said recess (30a, 30b) is provided in a cylindrical surface of the non-rotating ring (14) of the bearing unit in the rolling chamber (24).

5. Bearing unit according to one of the preceding claims, **characterized in that** said first and second lubricant reservoirs (34, 36) form two chambers in a replaceable cartridge (32).

6. Axlebox for railway vehicles equipped with a bearing unit according to any of the preceding claims that is mounted within a housing (16) and covered by a cover (22), said housing (16) being covered by a end cap (20), said bearing unit being dedicated to be mounted onto an axle (18).

## Patentansprüche

1. Lagereinheit, umfassend ein Lager mit einem rotierenden Ring (12), einem nicht rotierenden Ring (14) und wenigstens einer Reihe von Rollelementen (10) in einer Rollkammer (24), die wenigstens zum Teil mit einem Schmiermittel gefüllt und zwischen den Ringen (12, 14) festgelegt ist, wobei die Rollkammer (24) mit wenigstens zwei Schmiermittelkanälen (26a, 26b, 28) versehen ist, wobei ein erster der Schmiermittelkanäle (26a, 26b, 28) dazu ausgelegt ist, verbrauchtes Schmiermittel aus der Rollkammer (24) zu entfernen, und ein zweiter der Schmiermittelkanäle (26a, 26b, 28), der nicht der erste Schmiermittelkanal ist, dazu ausgelegt ist, frisches Schmiermittel in die Rollkammer (24) nachzufüllen, wobei die Schmiermittelkanäle (26a, 26b, 28) mit einer Schmiermittelpumpe (38) verbunden sind, die wenigstens einen ersten Schmiermittelbehälter (34), der mit dem ersten Schmiermittelkanal (26a, 26b) verbunden ist, und einen zweiten Schmiermittelbehälter (36) umfasst, der mit einem Schmiermittelkanal (28) verbunden ist, der nicht der erste Schmiermittelkanal ist,
**dadurch gekennzeichnet, dass** die Schmiermittelbehälter (34, 36) auf zwei Seiten eines beweglichen Kolbens (40) auf eine solche Weise angeordnet sind, dass eine Erhöhung des Volumens in einem der Behälter einer Abnahme des Volumens in dem anderen Behälter entspricht und umgekehrt, und zwar auf eine solche Weise, dass das Schmiermittel in der Rollkammer (24) des Lagers in den ersten Schmiermittelbehälter (34) gesaugt wird und in der Rollkammer (24) des Lagers durch das Schmiermittel des ersten Schmiermittelbehälters (34) durch Bewegen des Kolbens (40) ersetzt wird.

2. Lagereinheit nach Anspruch 1, **dadurch gekennzeichnet, dass** sie ferner wenigstens einen Sensor (48), der dazu ausgelegt ist, wenigstens einen Betriebsparameter des Lagers zu erkennen, und eine Steuereinheit (50) umfasst, die dazu ausgelegt ist, die wenigstens eine Schmiermittelpumpe (38) auf Grundlage der Signale des Sensors (48) anzutreiben.

3. Lagereinheit nach einem der vorhergehenden Ansprüche, **dadurch gekennzeichnet, dass** der erste Schmiermittelkanal (26a, 26b) mit einer Vertiefung (30a, 30b) in den Wänden der Rollkammer (24) verbunden ist, wobei die Vertiefung derart ausgelegt ist, dass verbrauchtes Schmiermittel darin gesammelt wird.

4. Lagereinheit nach Anspruch 3, **dadurch gekennzeichnet, dass** die Vertiefung (30a, 30b) in einer zylindrischen Fläche des nicht rotierenden Rings (14) der Lagereinheit in der Rollkammer (24) vorgesehen ist.

5. Lagereinheit nach einem der vorhergehenden Ansprüche, **dadurch gekennzeichnet, dass** der erste und der zweite Schmiermittelbehälter (34, 36) zwei Kammern in einer austauschbaren Kassette (32) bilden.

6. Achslager für Eisenbahnfahrzeuge, das mit einer Lagereinheit nach einem der vorhergehenden Ansprüche ausgestattet und in einem Gehäuse (16) montiert und durch eine Abdeckung (22) abgedeckt ist, wobei das Gehäuse (16) durch eine Endkappe (20) abgedeckt ist, wobei die Lagereinheit dazu bestimmt ist, an eine Achse (18) montiert zu werden.

## Revendications

1. Unité de roulement comprenant un roulement ayant une bague (12) rotative, une bague (14) non rotative et au moins une rangée d'éléments roulants (10) dans une chambre de roulement (24) au moins partiellement remplie d'un lubrifiant et délimitée entre lesdites bagues (12, 14), ladite chambre de roulement (24) étant pourvue d'au moins deux canaux (26a, 26b, 28) de graissage,
dans laquelle un premier canal des canaux (26a, 26b, 28) de graissage est configuré pour faire sortir le lubrifiant usagé de la chambre de roulement (24) et un deuxième canal des canaux (26a, 26b, 28) de graissage différent du premier canal de graissage est configuré pour recharger la chambre de roulement (24) en lubrifiant nouveau, lesdits canaux (26a, 26b, 28) de graissage étant raccordés à une pompe (38) à lubrifiant comprenant au moins un premier réservoir (34) à lubrifiant raccordé au premier canal (26a, 26b) de graissage et un second réservoir (36) à lubrifiant raccordé à un canal (28) de graissage différent du premier canal de graissage,
**caractérisée en ce que** les réservoirs (34, 36) à lubrifiant sont disposés de part et d'autre d'un piston (40) mobile de telle sorte qu'une augmentation de volume dans l'un des réservoirs correspond à une diminution du volume de l'autre réservoir et vice versa, de telle sorte que le lubrifiant dans la chambre de roulement (24) du roulement est aspiré dans le premier réservoir (34) à lubrifiant et remplacé dans la chambre de roulement (24) du roulement par le lubrifiant du premier réservoir (34) à lubrifiant grâce au déplacement du piston (40).

2. Unité de roulement selon la revendication 1, **caractérisée en ce qu'**elle comprend en outre au moins un capteur (48), configuré pour détecter au moins un paramètre de fonctionnement du roulement, et une unité de commande (50), configurée pour entraîner ladite pompe (38) à lubrifiant sur la base des signaux du capteur (48).

3. Unité de roulement selon l'une quelconque des revendications précédentes, **caractérisée en ce que** ledit premier canal (26a, 26b) de graissage est raccordé à un évidement (30a, 30b) dans les parois de la chambre de roulement (24), dans laquelle ledit évidement est configuré de telle sorte que la graisse usagée y soit recueillie.

4. Unité de roulement selon la revendication 3, **caractérisée en ce que** ledit évidement (30a, 30b) est disposé dans une surface cylindrique de la bague (14) non rotative de l'unité de roulement dans la chambre de roulement (24).

5. Unité de roulement selon l'une quelconque des revendications précédentes, **caractérisée en ce que** lesdits premier et second réservoirs (34, 36) à lubrifiant constituent deux chambres dans une cartouche (32) jetable.

6. Boîte d'essieu pour véhicules ferroviaires équipée d'une unité de roulement selon l'une quelconque des revendications précédentes qui est montée dans un logement (16) et couverte par un couvercle (22), ledit logement (16) étant couvert par un bouchon de bout (20), ladite unité de roulement ayant vocation à être montée sur un essieu (18).
